# EUROPEAN PATENT APPLICATION

(11) **EP 4 661 240 A1**
(43) Date of publication of application: **10.12.2025**
(21) Application number: 24783954.1
(22) Date of filing: 18.01.2024
(51) Int. Cl.: H02J 7/00

(54) **CHARGE-DISCHARGE CIRCUIT, CHARGE-DISCHARGE CONTROL METHOD, CONTROL APPARATUS AND ELECTRONIC DEVICE**

(30) Priority: 07.04.2023 CN 202310394567
(71) Applicant: Huawei Technologies Co., Ltd., Shenzhen, Guangdong 518129 (CN)
(72) Inventor: XU, Jianguo, Shenzhen, Guangdong 518129 (CN); TANG, Jianhua, Shenzhen, Guangdong 518129 (CN); WANG, Xiaoying, Shenzhen, Guangdong 518129 (CN); ZHONG, Guochen, Shenzhen, Guangdong 518129 (CN)
(74) Representative: MERH-IP Matias Erny Reichl Hoffmann Patentanwälte PartG mbB
(86) International application number: PCT/CN2024/073109
(87) International publication number: WO 2024/207869

(57) **Abstract**

Embodiments of this application provide a charging/discharging circuit, a charging/discharging control method, a control apparatus, and an electronic device, used in the field of charging technologies. The charging/discharging circuit includes three battery group. A first battery group is coupled to an input port. A negative electrode of a second battery group and a third battery group that are connected in parallel to each other is grounded, and a positive electrode of the second battery group and the third battery group is coupled to the first battery group through a switch. A negative electrode of the first battery group is further grounded through a switch. In addition, the input port is coupled to an output port through a buck circuit, the first battery group and the second battery group that are connected in parallel are coupled to an output of the buck circuit through a switch, and the first battery group is coupled to the output of the buck circuit through another switch. The output port is coupled to the output of the buck circuit. In this way, during charging, the first battery group to the third battery group can be first charged in series, and supplementary charging can be performed on the second battery group and the third battery group; and during discharging, the three battery groups discharge in parallel.

## Description

This application claims priority to Chinese Patent Application No. 202310394567.0, filed with the China National Intellectual Property Administration on April 7, 2023 and entitled "CHARGING/DISCHARGING CIRCUIT, CHARGING/DISCHARGING CONTROL METHOD, CONTROL APPARATUS, AND ELECTRONIC DEVICE", which is incorporated herein by reference in its entirety.

### TECHNICAL FIELD

This application relates to the field of charging technologies, and in particular, to a charging/discharging circuit, a charging/discharging control method, a control apparatus, and an electronic device.

### BACKGROUND

At present, many electronic products use multi-battery power supply systems. Considering that series charging on batteries has an excessively high requirement on a voltage and some of the batteries are prone to not being fully charged, most existing multi-battery charging solutions use multi-battery parallel charging. In other words, a plurality of batteries are charged in parallel. During discharging, multi-battery parallel discharging is used to supply power to components in the electronic product. To meet requirements of users on faster charging and reduce charging duration, the foregoing solutions often use high-voltage direct charging. However, a charging voltage cannot be excessively high due to the use of multi-battery parallel charging. In addition, there is a need to configure a plurality of charging chips for voltage reduction and current multiplication. Consequently, costs and a routing area of the power supply system are increased.

### SUMMARY

Embodiments of this application provide a charging/discharging circuit, a charging/discharging control method, a control apparatus, and an electronic device, to resolve a problem that costs are high and a routing area is large in a present multi-battery parallel charging manner.

To resolve the foregoing problem, the following technical solutions are used in embodiments of this application.

According to a first aspect, a charging/discharging circuit is provided. The charging/discharging circuit includes an input port, a buck circuit, a first switch, a second switch, a third switch, a fourth switch, a first battery group, a second battery group, a third battery group, and an output port. A first end of the buck circuit and a positive electrode of the first battery group are both coupled to the input port. A first end of the first switch, a first end of the second switch, and the output port are all coupled to an output of the buck circuit. A second end of the first switch is coupled to the positive electrode of the first battery group. A first end of the third switch, a positive electrode of the second battery group, and a positive electrode of the third battery group are all coupled to a second end of the second switch. A second end of the third switch and a first end of the fourth switch are both coupled to a negative electrode of the first battery group. A negative electrode of the second battery group, a negative electrode of the third battery group, and a second end of the fourth switch are all grounded. When there is a need for charging, the third switch may be first turned on, so that the second battery group and the third battery group that are connected in parallel and the first battery group can form a series charging circuit. In this way, charging can be performed at a higher charging voltage. In addition, the second battery group and the third battery group are not fully charged due to series charging. Therefore, the second switch may be turned on during charging, to perform, through the buck circuit, supplementary charging on the second battery group and the third battery group that are connected in parallel. This prevents an excessively large difference between states of charge of the three battery groups. When there is a need for discharging, the first switch, the second switch, and the fourth switch may be turned on, so that the first battery group to the third battery group can discharge in parallel. Based on this, it can be ensured that the plurality of battery groups are charged and discharge in an orderly manner, and use of a charging chip can be reduced, so that costs and a routing area are reduced.

In a possible implementation, the charging/discharging circuit further includes: a first protection circuit coupled between the input port and an input of the buck circuit, and a second protection circuit coupled between the input port and the positive electrode of the first battery group. Based on this, when a charging voltage of the input port is excessively high, the first protection circuit may be disconnected to avoid damage to the buck circuit and another following component, and the second protection circuit may be disconnected to avoid damage to the first battery group to the third battery group.

In a possible implementation, the charging/discharging circuit further includes a fourth battery group. A positive electrode of the fourth battery group is coupled to the second end of the second switch, and a negative electrode of the fourth battery group is grounded. Based on this, an output current of the output port can be increased, to better meet power supply requirements of some components.

In a possible implementation, the charging/discharging circuit further includes a fifth switch. A first end of the fifth switch is coupled to the second end of the second switch. A second end of the fifth switch is coupled to the positive electrode of the fourth battery group. Based on this, when there is a need to charge the fourth battery group, the fifth switch may be turned on, and after the fourth battery group is fully charged, the fifth switch may be turned off. Then, when a load coupled to the output port operates normally, only the first switch, the second switch, and the fourth switch may be turned on, to provide, for the load, an operating voltage and a current that are required for normal operation. When the load needs to operate in an overloaded state, the fifth switch may be turned on, to provide a relatively high instantaneous current for the load through the fifth battery group.

In a possible implementation, the charging/discharging circuit further includes a controller. The first switch, the second switch, the third switch, and the fourth switch are all coupled to the controller. The controller may control the first switch to the fourth switch based on the input voltage of the input port and state-of-charge information of each battery group, so that the first battery group to the third battery group are charged and discharge effectively.

According to a second aspect, a charging/discharging control method is provided. The charging/discharging control method is applied to the charging/discharging circuit according to any one of the possible implementations of the first aspect. The method is performed by the controller, and execution steps are as follows: turning on the third switch, and turning off the first switch, the second switch, and the fourth switch, to charge the first battery group, the second battery group, and the third battery group; and turning on the second switch to perform supplementary charging on the second battery group and the third battery group. Based on this, the first battery group to the third battery group may be first charged in series, and then supplementary charging may be performed on the second battery group and the third battery group through parallel charging, to ensure that the battery groups are fully charged and increase a charging speed.

In a possible implementation, the method further includes: turning on the first switch, the second switch, and the fourth switch, and turning off the third switch, to discharge to the output port. Based on this, when the charging voltage is insufficient, the first battery group to the third battery group may be controlled to discharge in parallel.

In a possible implementation, the method further includes: disconnecting the first protection circuit and the second protection circuit. Based on this, when a voltage of a circuit including the buck circuit or the charging voltage of the input port is excessively high, the first protection circuit may be disconnected to avoid damage to the buck circuit and another following component, and the second protection circuit may be disconnected to avoid damage to the first battery group to the third battery group.

According to a third aspect, a control apparatus is provided. The control apparatus includes a processor and a memory. The memory stores computer program instructions. When the computer program instructions are executed by the processor, the charging/discharging control method according to any one of the possible implementations of the second aspect is implemented.

According to a fourth aspect, a computer-readable storage medium is provided. The computer-readable storage medium stores computer program instructions. When the computer program instructions are executed by a processor, the charging/discharging control method according to any one of the possible implementations of the second aspect is implemented.

According to a fifth aspect, an electronic device is provided. The electronic device includes the charging/discharging circuit according to the first aspect, and a load coupled to the output port of the charging/discharging circuit.

According to a sixth aspect, a computer program product is provided. When the computer program product is executed by a processor, the charging/discharging control method according to any one of the possible implementations of the second aspect is implemented.

For technical effects that can be brought by the third aspect to the sixth aspect, refer to the first aspect and the second aspect. Details are not described herein again.

### BRIEF DESCRIPTION OF DRAWINGS

FIG. 1 is a diagram of a structure of a multi-battery charging/discharging circuit;
FIG. 2 is a diagram of a structure of a charging/discharging circuit according to an embodiment of this application;
FIG. 3 is a diagram of a structure of another charging/discharging circuit according to an embodiment of this application;
FIG. 4 is a diagram of a structure of another charging/discharging circuit according to an embodiment of this application;
FIG. 5 is a diagram of a structure of another charging/discharging circuit according to an embodiment of this application; and
FIG. 6 is a schematic flowchart of a charging/discharging control method according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In descriptions of this application, unless otherwise specified, "/" indicates that associated objects are in an "or" relationship, for example, A/B may indicate A or B. "And/or" in this application merely describes an association relationship between associated objects and indicates that three relationships may exist. For example, A and/or B may indicate three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one of the following items (pieces): a, b, or c may indicate: a; b; c; a and b; a and c; b and c; or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, the terms such as "example" or "for example" used herein are intended to present a related concept in a specific manner for ease of understanding.

In embodiments of this application, the terms "coupling" and "connection" should be understood in a broad sense unless otherwise specified and limited. For example, "connection" may be a physical direct connection, or an indirect connection implemented through an electronic component, for example, a connection implemented through a resistor, an inductor, a capacitor, or another electronic component.

The following describes the present invention in detail with reference to the accompanying drawings and embodiments.

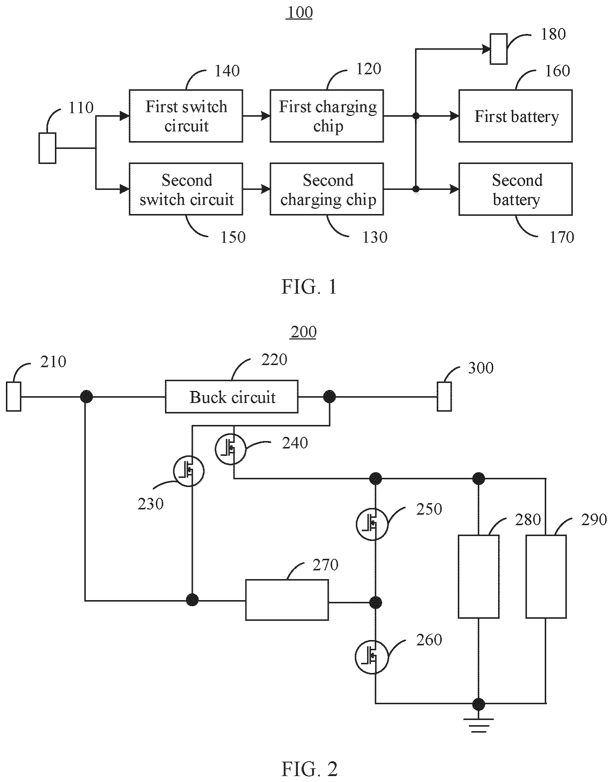

At present, many electronic devices use multi-battery power supply solutions. Power may be supplied to components of different parts in a targeted manner through a plurality of batteries. The electronic device may include a mobile phone, a tablet computer, a notebook computer, a personal computer (personal computer, PC), an ultra-mobile personal computer (ultra-mobile personal computer, UMPC), a handheld computer, a netbook, a smart home device (such as a smart television, a smart screen, a large screen, a smart speaker, or a smart air conditioner), a personal digital assistant (personal digital assistant, PDA), a wearable device (such as a smart watch or a smart band), a vehicle-mounted device, a virtual reality device, or the like. This is not limited in embodiments of this application. To facilitate charging of a plurality of batteries, multi-battery parallel charging is usually used, and parallel discharging is used. A foldable mobile phone is used as an example. Currently, many foldable mobile phones use dual-battery power supply solutions. As shown in FIG. 1, a charging/discharging circuit 100 in a present foldable mobile phone usually includes an input port 110, a first charging chip 120, a second charging chip 130, a first switch circuit 140, a second switch circuit 150, a first battery 160, a second battery 170, and an output port 180. An input of the first charging chip 120 is coupled to the input port through the first switch circuit 140. An input of the second charging chip 130 is coupled to the input port 110 through the second switch circuit 150. A positive electrode of the first battery 160 is coupled to an output of the first charging chip 120. A positive electrode of the second battery 170 is coupled to an output of the second charging chip 130. A negative electrode of the first battery 160 and a negative electrode of the second battery 170 are both grounded. The positive electrode of the first battery 160 and the positive electrode of the second battery 170 are further coupled to the output port 180. The output port 180 is coupled to a load. The input port 110 may be connected to a wired charger or a wireless charger. During charging, the first charging chip 120 may reduce a voltage of the input port 110 and perform current multiplication to charge the first battery 160, and the second charging chip 130 may reduce the voltage of the input port 110 and perform current multiplication to charge the second battery 170. In addition, power may also be supplied, through the first charging chip 120 and the second charging chip 130 during charging, to the load coupled to the output port, so that a user can normally use the mobile phone during charging. When charging ends, the first battery 160 and the second battery 170 may discharge in parallel. Besides, when an input voltage or an input current of the input port is excessively high, the first switch circuit 140 and the second switch circuit 150 may further be turned off, to avoid damage to the first charging chip 120, the second charging chip 130, the first battery 160, the second battery 170, and the load coupled to the output port 180. However, a charging voltage cannot be excessively high due to use of multi-battery parallel charging. In addition, there is a need to configure a plurality of charging chips for voltage reduction and current multiplication. Consequently, costs and a routing area of a power supply system are increased.

To resolve this problem, as shown in FIG. 2, an embodiment of this application provides a charging/discharging circuit 200. The charging/discharging circuit 200 includes an input port 210, a buck circuit 220, a first switch 230, a second switch 240, a third switch 250, a fourth switch 260, a first battery group 270, a second battery group 280, a third battery group 290, and an output port 300. A first end of the buck circuit 220 and a positive electrode of the first battery group 270 are both coupled to the input port 210. A first end of the first switch 230, a first end of the second switch 240, and the output port 300 are all coupled to an output of the buck circuit 220. A second end of the first switch 230 is coupled to the positive electrode of the first battery group 270. A first end of the third switch 250, a positive electrode of the second battery group 280, and a positive electrode of the third battery group 290 are all coupled to a second end of the second switch 240. A second end of the third switch 250 and a first end of the fourth switch 260 are both coupled to a negative electrode of the first battery group 270. A negative electrode of the second battery group 280, a negative electrode of the third battery group 290, and a second end of the fourth switch 260 are all grounded. The first switch 230 to the fourth switch 260 each may be a metal-oxide-semiconductor field-effect transistor (metal-oxide-semiconductor field-effect transistor, MOSFET, briefly referred to as a MOS transistor) or another type of transistor. This is not specifically limited in embodiments of this application. A sampling circuit may be disposed at the input port 210, and an input voltage of the input port 210 may be detected through the sampling circuit. A corresponding state-of-charge detection circuit may be disposed on each battery group, to detect a state of charge of each battery group.

When the sampling circuit for the input port 210 detects that the input voltage meets a charging requirement, the third switch 250 may be first turned on, so that the second battery group 280 and the third battery group 290 that are connected in parallel and the first battery group 270 form a series charging circuit. In this way, charging can be performed at a higher charging voltage. However, due to internal resistance of the first battery group 270, use of series charging reduces a charging voltage and a charging current of the second battery group 280 and the third battery group 290 that are connected in parallel. Consequently, when the first battery group 270 is fully charged, the second battery group 280 and the third battery group 290 are still not fully charged. In this case, the second switch 240 may be turned on during charging, to perform, through the buck circuit 220, supplementary charging on the second battery group 280 and the third battery group 290 that are connected in parallel. This prevents an excessively large difference between the states of charge of the three battery groups. When there is a need for discharging, the first switch 230, the second switch 240, and the fourth switch 260 may be turned on, so that the first battery group 270 to the third battery group 290 can discharge in parallel.

Based on this, the input port 210 may be directly connected to the battery groups without a need to configure an additional charging chip. This avoids an additional loss, and can reduce costs and a routing area. Besides, the first battery group 270 to the third battery group 290 may be charged faster through series charging, so that charging duration is reduced. In addition, supplementary charging may be performed, through the buck circuit 220, on the second battery group 280 and the third battery group 290 that are connected in parallel, ensuring that the second battery group 280 and the third battery group 290 are both fully charged.

In a possible implementation, the first switch 230, the second switch 240, the third switch 250, and the fourth switch 260 may be coupled to a controller. The controller may obtain state-of-charge information of each battery group through the state-of-charge detection circuits disposed on the first battery group 270, the second battery group 280, and the third battery group 290, and detect the corresponding input voltage through the sampling circuit disposed at the input port 210. When it is detected that the input voltage of the input port 210 exceeds a first threshold, the controller may input a drive signal to the third switch 250 to turn on the third switch 250, so that the first battery group 270, the second battery group 280, and the third battery group 290 are charged in series. When it is detected that the state of charge of the first battery group 270 exceeds a second threshold, the controller may input a drive signal to the second switch 240 to turn on the second switch 240, so that supplementary charging is performed, through the buck circuit 220, on the second battery group 280 and the third battery group 290 that are connected in parallel. As a result, the second battery group 280 and the third battery group 290 can also be fully charged. The first threshold may be set based on a minimum operating voltage of a load coupled to the input port 210 or a minimum charging voltage of the battery group. The second threshold may be set based on the state of charge of the fully-charged first battery group 270. For example, the second threshold may be set to 70% of the state of charge of the fully-charged first battery group 270.

The first threshold may alternatively be set according to an actual charging requirement. This is not specifically limited in embodiments of this application. In addition, the second threshold may alternatively be set based on actual charging speeds of the first battery group 270 to the third battery group 290. This is not specifically limited in embodiments of this application. Alternatively, during charging, the first switch 230, the second switch 240, and the third switch 250 that are used during charging may be controlled based on set charging duration.

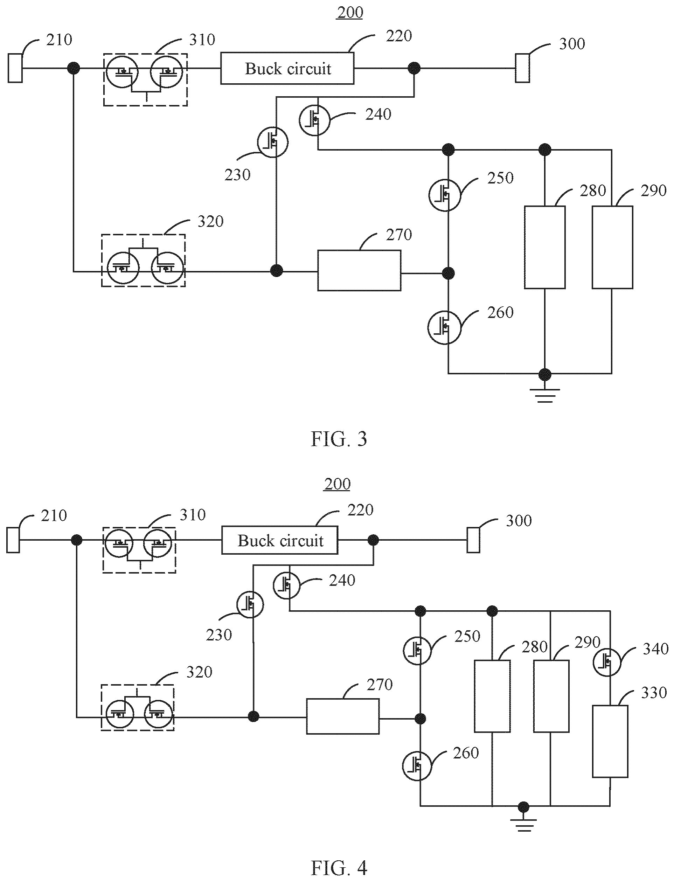

In a possible implementation, as shown in FIG. 3, a first protection circuit 310 may further be disposed between the input port 210 and an input of the buck circuit 220. A circuit between the input port 210 and the buck circuit 220 may be disconnected through the first protection circuit 310 when a circuit including the buck circuit 220 is abnormal. For example, the first protection circuit 310 may be a single MOS transistor, or two MOS transistors connected in series. The controller may obtain the corresponding input voltage through the sampling circuit disposed at the input port 210. When the obtained input voltage exceeds a set third threshold, the controller may control the first protection circuit 310 to be disconnected, to avoid damage to the buck circuit 220 and following components. Likewise, a second protection circuit 320 may also be disposed between the input port 210 and the positive electrode of the first battery group 270. A circuit between the input port 210 and the first battery group 270 may be disconnected through the second protection circuit 320 when the input voltage of the input port 210 exceeds the set third threshold. For example, the second protection circuit 320 may also adopt a single MOS transistor, or two MOS transistors connected in series. The controller may obtain the corresponding input voltage through the sampling circuit disposed at the input port 210. When the obtained input voltage exceeds the set third threshold, the controller may control the second protection circuit 320 to be disconnected, to avoid damage to the first battery group 270 to the third battery group 290.

In a possible implementation, as shown in FIG. 4, the charging/discharging circuit 200 may further include a fourth battery group 330. A positive electrode of the fourth battery group 330 is coupled to the second end of the second switch 240, and a negative electrode of the fourth battery group 330 is grounded. The fourth battery group 330 is connected in parallel to the second battery group 280 and the third battery group 290. As a result, an output current of the output port 300 can be increased during discharging, to provide a relatively high instantaneous current for some loads that need to operate under high load.

Further, a fifth switch 340 may be disposed on the foregoing charging/discharging circuit 200. A first end of the fifth switch 340 is coupled to the second end of the second switch 240. A second end of the fifth switch 340 is coupled to the positive electrode of the fourth battery group 330. When the load coupled to the output port 300 does not need to operate in a high-load state, the fifth switch 340 may be controlled through a driver to be turned off, to reduce a loss of the fourth battery group 330. When the load coupled to the output port 300 needs to operate in the high-load state, the fifth switch 340 may be controlled through the driver to be turned on, to provide a relatively high instantaneous current for the load that needs to operate in the high-load state.

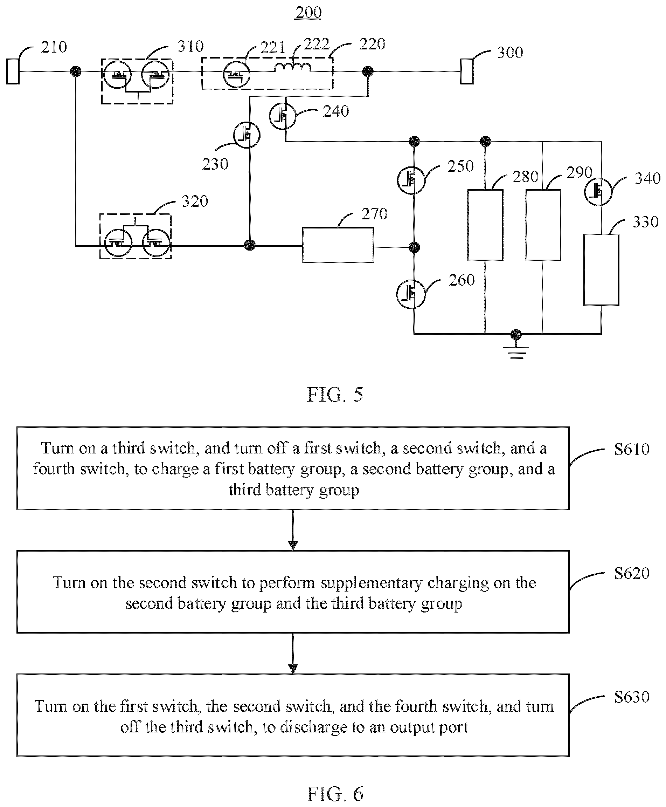

In a possible implementation, as shown in FIG. 5, the buck circuit 220 may include a sixth switch 221 and an inductor 222. A first end of the sixth switch 221 is coupled to the input port 210. A second end of the sixth switch 221 is coupled to a first end of the inductor 222. The first end of the first switch 230, the first end of the second switch 240, and the output port 300 are all coupled to a second end of the inductor 222. In this way, when there is a need for charging, the sixth switch can be controlled through the controller to be turned on, and then the input voltage can be reduced through the inductor 222, to perform supplementary charging on the second battery group 280 and the third battery group 290 that are connected in parallel. The sixth switch 221 may be a MOS transistor or another type of transistor. This is not specifically limited in embodiments of this application.

The buck circuit is merely a feasible implementation provided in embodiments of this application. The buck circuit may alternatively be another type of buck conversion circuit (briefly referred to as a buck circuit). This is not specifically limited in embodiments of this application.

In an implementation, the first switch 230, the second switch 240, the sixth switch 221, and the inductor 222 may be integrated in a same integrated circuit chip (integrated circuit chip, IC), to improve integration of the circuit and reduce the routing area.

The third switch 250 and the fourth switch 260 may also be integrated in the IC chip, to further improve the integration of the charging/discharging circuit 200 and reduce the routing area.

Optionally, the inductor may alternatively be used as an external component, to facilitate selection of inductors with different parameters according to actual voltage reduction requirements.

In an implementation, as shown in FIG. 6, an embodiment of this application further provides a charging/discharging control method, applied to the foregoing charging/discharging circuit 200. The charging/discharging control method is performed by the controller. Execution steps of the method are as follows:
S610: Turn on the third switch, and turn off the first switch, the second switch, and the fourth switch, to charge the first battery group, the second battery group, and the third battery group.

The controller may detect an input voltage of the input port 210 through the sampling circuit. If the input voltage of the input port 210 exceeds a first threshold, the controller controls the third switch 250 to be turned on, to charge the first battery group 270 to the third battery group 290 in series. The first threshold may be set based on a minimum operating voltage of a load coupled to the input port 210 or a minimum charging voltage of the battery group. This is not specifically limited in embodiments of this application.

Optionally, during execution of S610, it may alternatively be detected whether the input port is connected to a charger, and if it is detected that the input port is connected to the charger, the third switch is turned on, and the first switch, the second switch, and the fourth switch are turned off, to charge the first battery group, the second battery group, and the third battery group.

S620: Turn on the second switch to perform supplementary charging on the second battery group and the third battery group.

The second threshold may be set based on the state of charge of the fully-charged first battery group 270. For example, the second threshold may be set to 70% of the state of charge of the fully-charged first battery group 270. When a state of charge of the first battery group 270 exceeds a set second threshold, the controller may turn on the second switch 240, to perform supplementary charging on the second battery group 280 and the third battery group 290 that are connected in parallel. As a result, the first battery group 270 to the third battery group 290 can be all fully charged.

The second threshold may alternatively be set based on actual charging speeds of the first battery group 270 to the third battery group 290. This is not specifically limited in embodiments of this application. Alternatively, during charging, the first switch 230, the second switch 240, and the third switch 250 that are used during charging may be controlled based on set charging duration.

S630: Turn on the first switch, the second switch, and the fourth switch, and turn off the third switch, to discharge to the output port.

For example, when the input voltage detected by the sampling circuit for the input port 210 is less than the first threshold, the first switch 230, the second switch 240, and the fourth switch 260 may be turned on, and the third switch 250 may be turned off. In this case, the first battery group 270, the second battery group 280, and the third battery group 290 are connected in parallel between the output port 300 and the ground, and may discharge in parallel, to reduce internal resistance of the battery groups and increase discharging duration.

In a possible implementation, during charging, the controller may further determine whether the input voltage of the input port 210 exceeds a third threshold, to avoid damage to components in the charging/discharging circuit 200 during charging. If the input voltage of the input port 210 exceeds the third threshold, the controller may disconnect the first protection circuit 310 and the second protection circuit 320, to avoid damage caused by the excessively high input voltage to the components in the circuit. The third threshold may be set to a maximum charging voltage of the battery group.

Optionally, in embodiments of this application, an input current of the input port 210 may also be detected through the sampling circuit. The third threshold may alternatively be set to a maximum input current of the battery group. During charging, the controller may determine whether the charging current detected at the input port 210 exceeds the corresponding third threshold. If the charging current detected at the input port 210 exceeds the corresponding third threshold, the controller may disconnect the first protection circuit 310 and the second protection circuit 320, to avoid damage caused by the excessively high input voltage to the components in the circuit.

The third threshold may alternatively be set according to an actual charging requirement of the battery group. This is not specifically limited in embodiments of this application.

Optionally, during execution of S630, it may alternatively be detected through a disposed detection circuit whether the input port is connected to the charger, and if the input port is not connected to the charger, the first switch, the second switch, and the fourth switch are turned on, and the third switch is turned off, to discharge to the output port.

In a possible implementation, an embodiment of this application further provides a control apparatus. The control apparatus includes a processor and a memory. The memory stores computer program instructions. When the computer program instructions are executed by the processor, the charging/discharging control method can be implemented. The processor may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor may alternatively be another apparatus having a processing function, for example, a circuit, a component, or a software module. This is not limited in this application. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example rather than limitation, many forms of random access memories (random access memories, RAMs) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In a possible implementation, an embodiment of this application further provides a computer-readable storage medium. The computer-readable storage medium stores computer instructions. When the computer instructions are run on an electronic device, the method according to the foregoing implementations is implemented. For example, the computer-readable storage medium may be a read-only memory (read-only memory, ROM), a random access memory (random access memory, RAM), a compact disc read-only memory (compact disc read-only memory, CD-ROM), a magnetic tape, a floppy disk, a USB flash drive, an optical data storage device, or the like.

In a possible implementation, an embodiment of this application further provides a computer program product. When the computer program product runs on a computer, the computer is enabled to perform the method according to any one of the foregoing implementations.

The foregoing descriptions about implementations allow a person skilled in the art to understand that, for the purpose of convenient and brief description, division into the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional modules in embodiments of this application may be integrated into one processing unit, or each of the units may exist alone physically, or two or more units are integrated into one unit. The integrated unit may be implemented in a form of hardware, or may be implemented in a form of software function unit.

When the integrated unit is implemented in the form of software function unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of software product. The software product is stored in a storage medium, and includes several instructions for instructing a device, for example, a single-chip microcomputer or a chip, or a processor (processor) to perform all or some of the steps of the method in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A charging/discharging circuit, comprising an input port, a buck circuit, a first switch, a second switch, a third switch, a fourth switch, a first battery group, a second battery group, a third battery group, and an output port, wherein
a first end of the buck circuit and a positive electrode of the first battery group are both coupled to the input port;
a first end of the first switch, a first end of the second switch, and the output port are all coupled to an output of the buck circuit;
a second end of the first switch is coupled to the positive electrode of the first battery group;
a first end of the third switch, a positive electrode of the second battery group, and a positive electrode of the third battery group are all coupled to a second end of the second switch;
a second end of the third switch and a first end of the fourth switch are both coupled to a negative electrode of the first battery group; and
a negative electrode of the second battery group, a negative electrode of the third battery group, and a second end of the fourth switch are all grounded.

2. The charging/discharging circuit according to claim 1, further comprising: a first protection circuit coupled between the input port and an input of the buck circuit, and a second protection circuit coupled between the input port and the positive electrode of the first battery group.

3. The charging/discharging circuit according to claim 1 or 2, further comprising a fourth battery group, wherein a positive electrode of the fourth battery group is coupled to the second end of the second switch, and a negative electrode of the fourth battery group is grounded.

4. The charging/discharging circuit according to claim 3, further comprising a fifth switch, wherein a first end of the fifth switch is coupled to the second end of the second switch, and a second end of the fifth switch is coupled to the positive electrode of the fourth battery group.

5. The charging/discharging circuit according to any one of claims 1 to 4, further comprising a controller, wherein the first switch, the second switch, the third switch, and the fourth switch are all coupled to the controller.

6. The charging/discharging circuit according to any one of claims 1 to 5, wherein the buck circuit comprises a sixth switch and an inductor; a first end of the sixth switch is coupled to the input port; a second end of the sixth switch is coupled to a first end of the inductor; and the first end of the first switch, the first end of the second switch, and the output port are all coupled to a second end of the inductor.

7. A charging/discharging control method, applied to a charging/discharging circuit, wherein the charging/discharging circuit comprises an input port, a buck circuit, a first switch, a second switch, a third switch, a fourth switch, a first battery group, a second battery group, a third battery group, and an output port; a first end of the buck circuit and a positive electrode of the first battery group are both coupled to the input port; a first end of the first switch, a first end of the second switch, and the output port are all coupled to an output of the buck circuit; a second end of the first switch is coupled to the positive electrode of the first battery group; a first end of the third switch, a positive electrode of the second battery group, and a positive electrode of the third battery group are all coupled to a second end of the second switch; a second end of the third switch and a first end of the fourth switch are both coupled to a negative electrode of the first battery group; a negative electrode of the second battery group, a negative electrode of the third battery group, and a second end of the fourth switch are all grounded; and the method comprises:
turning on the third switch, and turning off the first switch, the second switch, and the fourth switch, to charge the first battery group, the second battery group, and the third battery group; and
turning on the second switch to perform supplementary charging on the second battery group and the third battery group.

8. The method according to claim 7, further comprising:
turning on the first switch, the second switch, and the fourth switch, and turning off the third switch, to discharge to the output port.

9. The method according to claim 7, wherein the charging/discharging circuit further comprises: a first protection circuit coupled between the input port and an input of the buck circuit, and a second protection circuit coupled between the input port and the positive electrode of the first battery group; and the method further comprises:
disconnecting the first protection circuit and the second protection circuit.

10. A control apparatus, comprising a processor and a memory, wherein the memory stores computer program instructions, and when the computer program instructions are executed by the processor, the method according to any one of claims 7 to 9 is implemented.

11. A computer-readable storage medium, storing computer program instructions, wherein when the computer program instructions are executed by a processor, the method according to any one of claims 7 to 9 is implemented.

12. An electronic device, comprising the charging/discharging circuit according to any one of claims 1 to 6 and a load coupled to the output port of the charging/discharging circuit.
